# EUROPEAN PATENT SPECIFICATION

(11) **EP 3 154 883 B1**
(45) Date of publication and mention of the grant of the patent: **18.04.2018**
(21) Application number: 15729119.6
(22) Date of filing: 04.06.2015
(51) Int. Cl.: B65G 53/16

(54) **METHOD AND DEVICE FOR FEEDING BULK MATERIAL THROUGH A PNEUMATIC CONVEYING LINE**
VERFAHREN UND VORRICHTUNG ZUM ZUFÜHREN VON SCHÜTTGUT DURCH EINE PNEUMATISCHE FÖRDERLEITUNG
PROCÉDÉ ET DISPOSITIF POUR ACHEMINER UN MATÉRIAU EN VRAC PAR L'INTERMÉDIAIRE D'UNE LIGNE DE TRANSPORT PNEUMATIQUE

(30) Priority: 13.06.2014 LU 92477
(43) Date of publication of application: 19.04.2017
(73) Proprietor: Paul Wurth S.A., 1122 Luxembourg (LU)
(72) Inventor: SCHMIT, Louis, L-1456 Luxembourg (LU); MAHOWALD, Pierre, L-8320 Capellen (LU); MULLER, Ben, L-6868 Wecker (LU)
(74) Representative: Office Freylinger
(86) International application number: PCT/EP2015/062512
(87) International publication number: WO 2015/189091

(56) References cited:
- WO-A1-2009/147177
- US-A- 3 236 565
- US-A- 3 809 438

## Description

### Introduction

The present invention relates to a method and device for feeding bulk material through a pneumatic conveying line, more particularly for feeding pulverised material such as pulverised coal to a metallurgical furnace.

### Description of the Prior Art

Pulverised coal is often injected into a blast furnace as a substitute to coke. The pulverised coal is conveyed pneumatically through a pneumatic conveying line to a lance for injection into the furnace. At the inlet end of the pneumatic conveying line, the pulverised coal is fluidised by mixing it with a conveying gas.

In such pneumatic conveying lines, transporting solid bulk material, especially pulverised material, over larger distances, especially in so-called fluidised dense phase conveying, with possibly in addition a considerable backpressure at the outlet of the pneumatic conveying line, the pressure drop as well as the lowering of the line outlet pressure as compared to the line inlet pressure may be significant.

In case pneumatic conveying is started in the conditions of dense phase conveying at the line inlet, this conveying may no longer be a dense phase conveying further downstream in the line and especially close to the outlet of the pneumatic conveying line, i.e. in parallel to the pulverised material flow a conveying gas volume flow and thus mass flow larger than what would be required for dense phase conveying is flowing through the line. The longer the distance from the line inlet, the lower is the pressure level in the line.

This conveying gas flow larger than necessary alters the characteristics and behaviour of the pneumatic conveying. In addition, a flow of conveying gas larger than necessary may have a negative impact in the receiver, such as e.g. a metallurgical reactor, downstream of the pneumatic conveying line. To avoid these shortcomings, it has been suggested to eliminate excess conveying gas in the pneumatic conveying line.

It has been suggested to insert a settling vessel into the pneumatic conveying line, where the mixture of solid bulk material and conveying gas is largely separated by gravity, the solid material being "compacted" to bulk density. However, this solution requires a complete de-fluidisation and subsequent fluidisation of the pulverised material.

WO 2009/147177 A1 discloses a method for conveying powder in a fluidized bed transport duct from an inlet point to at least one discharge point, according to the preamble of claim 1. The method comprises feeding powder into the transport duct at the inlet point, supplying gas to the transport duct so as to fluidize the powder in the transport duct. The gas is removed from the transport duct and dust is separated from the removed gas. The method further comprises a returning of the separated dust to the powder proximate to the discharge point.

### Object of the invention

Consequently, the object of the present invention is to provide an improved method and device for feeding bulk material through a pneumatic conveying line. This object is solved by a method as claimed in claim 1 and a device as claimed in claim 9.

### General description of the invention

In order to achieve this object, the present invention proposes a method for feeding bulk material through a pneumatic conveying line, the pneumatic conveying line having an inlet end and an outlet end, the method comprising fluidising the bulk material at the inlet end by adding conveying gas to form a fluidised material flow.

According to the present invention, the fluidised material flow is split into a first partial flow and a second partial flow at a first junction located near the outlet end of the pneumatic conveying line. The fluidised material from the second partial flow is fed through a separation device to separate conveying gas from bulk material. The bulk material recovered from the separation device is then fed into the first partial flow at a second junction located downstream of the first junction.

Thus, a portion of the fluidised material flow is branched-off and de-fluidised. As the de-fluidised bulk material of the branched-off portion is fed back into the remainder of the fluidised material flow, the flow characteristics of the fluidised material in the conveying line is altered. Excess conveying gas is removed from the material flow without necessitating a complete de-fluidisation and subsequent fluidisation. Also, the load factor, i.e. the ratio of solid material flow rate to conveying gas flow rate, in the pulverised conveying line is increased without requiring a new, second fluidising of the solid material flow by means of additional gas.

Preferably, bulk material collects at the bottom of the separation device, while conveying gas rises to the top. Conveying gas separated from the fluidised material in the separation device can easily be evacuated via an evacuation line. Such recovered conveying gas may be fed via the evacuation line to a gas cleaning device.

The separation device comprises a pressure vessel and the method comprises feeding the fluidised material from the second partial flow into the pressure vessel. Additionally, the separation device may comprise a cyclone type device arranged upstream of the pressure vessel. The cyclone type device may be substituted by another type of separator arranged upstream of the pressure vessel.

The feeding of bulk material into the first partial flow at the second junction preferably comprises mixing the bulk material into the fluidised material. A largely homogeneous mixture is preferred.

The separation device is shut off by closing a first shut-off valve in the second conveying line portion and a second shut-off valve in the outlet pipe. If not needed, the separation device can thereby be by-passed.

In order to take the separation device into service, the first shut-off valve is preferably opened after having pressurising gas has been fed into the separation device. Once sufficient bulk material has collected in the separation device, the second shut-off valve is opened while a third control valve in the first conveying line portion is at least partly closed.

Preferably, a pressure difference is measured between the pneumatic conveying line and the separation device and the measured pressure difference is used to regulate the flow of pressurising gas into the separation device.

The present invention also concerns a device for carrying out the above method.

Further details and advantages of the invention may be derived from the following detailed description of a not limiting preferred embodiment of the invention.

### Brief description of the figures

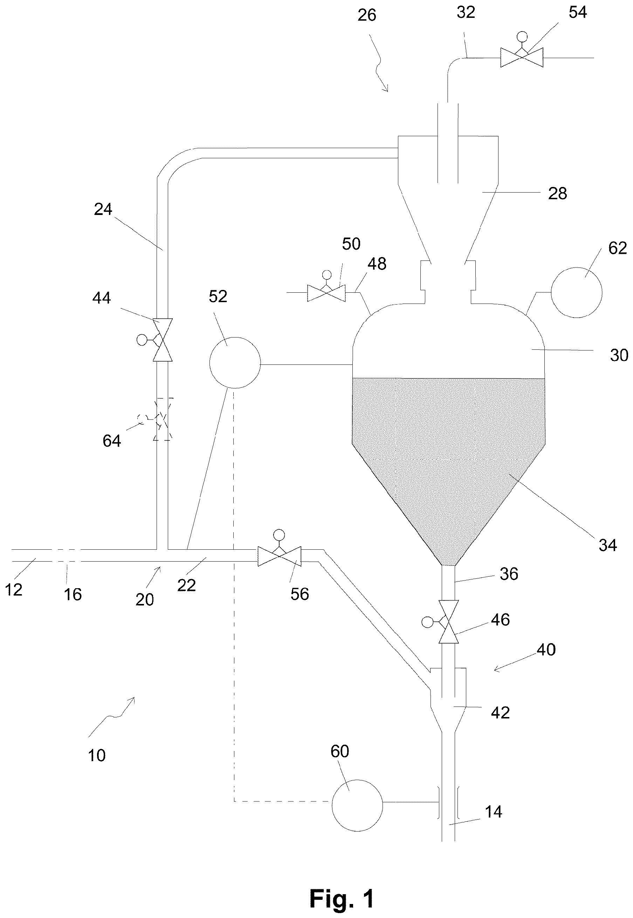

The present invention will be more apparent from the following description of one not limiting embodiment with reference to the attached drawing, wherein Fig.1 shows a schematic view of a pneumatic conveying line in accordance with the present invention.

### Detailed description with respect to the figures

Fig.1 shows a pneumatic conveying line 10 having an inlet end 12 and an outlet end 14. It should be noted that Fig.1 essentially only shows a portion of the conveying line near the outlet end 14. The dotted portion 16 near the inlet end 12 may e.g. have a length of up to 1000 meters. At or near the inlet end 12, the bulk material, generally pulverised material such as e.g. pulverised coal, to be conveyed is fluidised by adding conveying gas, generally nitrogen.

Near its outlet end 14, the pneumatic conveying line 10 comprises a first junction 20 for splitting the conveying line 10 into a first conveying line portion 22 and a second conveying line portion 24. The fluidised material flow being fed through the conveying line 10 is thus split into a first partial flow flowing through the first conveying line portion 22 and a second partial flow flowing through the second conveying line portion 24.

The second conveying line portion 24 comprises a separation device 26 for de-fluidising the second partial flow. Such a separation device 26 comprises, according to the embodiment shown in Fig.1, a cyclone 28 mounted upstream of a pressure vessel 30. A first separation is carried out in the cyclone 28, wherein a large portion of the conveying gas is separated from the fluidised material flow and evacuated via an evacuation line 32 arranged at the top of the cyclone 28. Bulk material on the other hand falls, essentially through gravity, into the pressure vessel 30, wherein it collects. It should be noted that separation can also be performed by gravity inside the pressure vessel 30 if the pressure vessel 30 is large enough to produce a residence time allowing such degassing.

The bulk material 34 sitting in the pressure vessel 30 is essentially free from conveying gas. This bulk material is fed, through an outlet pipe 36 connected between the bottom of the pressure vessel 30 and a second junction 40 for feeding the bulk material 34 into the first conveying line portion 22. The second junction 40 comprises a mixing device 42 which is configured so as to mix the bulk material 34 from the pressure vessel 30 into the fluidised material flow in the first conveying line portion 22. The mixing device 42 is such that the mixing produces a largely homogeneous mixture, which can then be fed through the outlet end 14 into a reactor, such as e.g. a metallurgical furnace.

A first shut-off valve 44 is arranged in the second conveying line portion 24 between the first junction 20 and the separation device 26. A second shut-off valve 46 is arranged in the outlet pipe 36 between the separation device 26 and the second junction 40. When the separation device 26 is out of operation, both shut-off valves 44, 46 are closed. All of the fluidised material flow is fed through the first conveying line portion 22.

In order to start the removal of conveying gas, the separation device 26, i.e. the cyclone 28 and the pressure vessel 30, are first pressurised by means of a pressurising gas, which may be compressed process gas. The pressurising gas is fed via a feed line 48 into the pressure vessel 30. The flow of pressurising gas is controlled by a first control valve 50 in the feed line 48. This pressurising is controlled by means of the pressure difference measurement 52 connected between the pressure vessel 30 and the pneumatic conveying line 10 in a region near the first junction 20. Once pressurising has been completed, the first shut-off valve 44 is opened and the pressure level in the separation device 26 is lowered by means of the second control valve 54 arranged in the evacuation line 32. The pressurising gas and/or conveying gas escaping the separation device 26 via the evacuation line 32 may be fed to a gas cleaning device (not shown), such as e.g. a pressurised bag filter.

The pressure difference between the pneumatic conveying line 10 and the separation device 26 pulls the second partial flow through the second conveying line portion 24 into the separation device 26. Conveying gas is separated from bulk material and removed through evacuation line 32. Bulk material 34 is collected in the pressure vessel 32. When a large enough amount of bulk material is contained in the pressure vessel 32, the second shut-off valve 46 in the outlet pipe 36 is opened. A third control valve in the first conveying line portion 22 is partly closed in order to reduce the pressure in the first conveying line portion 22 as compared to the pressure level in the pressure vessel 30. The pressure difference thus produced between the pressure vessel 30 and the first conveying line portion 22 pushes bulk material from the pressure vessel 30 through the outlet pipe 36 into the first conveying line portion 22, where it is mixed up with fluidised material supplied through the first conveying line portion 22.

The density of the newly produced mixture is measured by means of a density measurement 60. The value of the density measurement enters a control loop which receives as well a set-point value for that density and produces as an output a set point value for the pressure difference to exist between the pneumatic conveying line 10 and the separation device 26. This pressure difference is controlled by means of the second control valve 54 in the evacuation line 32. This pressure difference conditions the flow rate of pulverised material being branched off the pneumatic conveying line 10, degassed in the separation device 26, and finally re-injected into the pneumatic conveying line 10.

The third control valve 56 is operated in such a way as to keep a constant filling level in the pressure vessel 30 - this filling level being measured by an appropriate filling level measurement 62 - thus ensuring that the branched off flow rate equals the re-injected flow rate. Such filling level measurement 62 may e.g. be based on an actual level measurement or a weighing system.

In case pressure fluctuations in the pneumatic conveying line 10 are too important, the control of the branched-off flow rate can additionally be controlled by means of a fourth control valve 64 arranged in the second conveying line portion 24 between the first junction 20 and the separation device 26.

**Reference numerals**

| | | | |
|---|---|---|---|
| 10 | pneumatic conveying line | 40 | second junction |
| 12 | inlet end | 42 | mixing device |
| 14 | outlet end | 44 | first shut-off valve |
| 16 | dotted portion | 46 | second shut-off valve |
| 20 | first junction | 48 | feed line |
| 22 | first conveying line portion | 50 | first control valve |
| 24 | second conveying line portion | 52 | pressure difference measurement |
| 26 | separation device | 54 | second control valve |
| 28 | cyclone | 56 | third control valve |
| 30 | pressure vessel | 60 | density measurement |
| 32 | evacuation line | 62 | filling level measurement |
| 34 | bulk material | 64 | fourth control valve |
| 36 | outlet pipe | | |

## Claims

1. A method for feeding bulk material (34) through a pneumatic conveying line (10), said pneumatic conveying line (10) having an inlet end (12) and an outlet end (14), said method comprising fluidising said bulk material (34) at said inlet end (12) by adding conveying gas to form a fluidised material flow; splitting said fluidised material flow into a first partial flow and a second partial flow at a first junction (20) located near said outlet end (14) of said pneumatic conveying line (10);
feeding fluidised material from said second partial flow through a separation device (26) to separate conveying gas from bulk material (34); feeding bulk material (34) recovered from said separation device (26) into said first partial flow at a second junction (40) located downstream of said first junction (20); **characterised in that** said separation device (26) comprises a pressure vessel (30) and **in that** said method comprises feeding said fluidised material from said second partial flow into said pressure vessel (30); and
wherein said separation device (26) is shut off by closing a first shut-off valve (44) in said second conveying line portion (24) and a second shut-off valve (46) in an outlet pipe (36) connected between the bottom of said separation device (26) and the second junction (40)
wherein said separation device (26) is used by opening said second shut-off valve (46) while a third control valve (56) in said first conveying line portion (22) is at least partly closed.

2. The method according to claim 1, wherein bulk material (34) collects at the bottom of the separation device (26), while conveying gas rises to the top.

3. The method according to claim 1 or 2, wherein conveying gas separated from said fluidised material in said separation device (26) is evacuated via an evacuation line (32).

4. The method according to claim 3, wherein said conveying gas recovered from said separation device (26) is fed via said evacuation line (32) to a gas cleaning device.

5. The method according to claim 1 to 4, wherein said separation device (26) comprises a cyclone (28) type device arranged upstream of said pressure vessel (30) and said method comprises feeding said fluidised material from said second partial flow through said cyclone (28) type device.

6. The method according to any of claims 1 to 5, wherein feeding said bulk material (34) into said first partial flow at said second junction (40) comprises mixing said bulk material (34) into said fluidised material.

7. The method according to any of claims 1 to 6, wherein said first shut-off valve (44) is opened after pressurising gas has been fed into said separation device (26).

8. The method according to any of claims 1 to 7, wherein a pressure difference (52) is measured between said pneumatic conveying line (10) and said separation device (26) and wherein the measured pressure difference (52) is used to regulate the flow of pressurising gas into said separation device (26).

9. A device for feeding bulk material (34) through a pneumatic conveying line (10), said pneumatic conveying line (10) having an inlet end (12) and an outlet end (14), wherein said bulk material (34) is fluidised at said inlet end (12) by adding conveying gas to form a fluidised material flow;
said pneumatic conveying line (10) comprises a first junction (20) located near said outlet end (14) of said pneumatic conveying line (10) for splitting said pneumatic conveying line (10) into a first conveying line portion (22) for a first partial flow and a second conveying line portion (24) for a second partial flow; wherein said second conveying line portion (24) comprises a separation device (26) for separating conveying gas from bulk material (34); and
said pneumatic conveying line (10) comprises a second junction (40) located downstream of said first junction (20) for feeding bulk material (34) recovered from said separation device (26) into said first partial flow of said first conveying line portion (22); and **characterised in that** said separation device (26) comprises a pressure vessel (30) for collecting bulk material (34); and
wherein an outlet pipe (36) is connected between the bottom of said separation device (26) and the second junction (40) for feeding bulk material (34) from said separation device (26) to said first conveying line portion (22); and
wherein a first shut-off valve (44) is arranged in said second conveying line portion (24) between said first junction (20) and said separation device (26); and
wherein a second shut-off valve (46) is arranged in said outlet pipe (36); and
wherein a third control valve (56) is arranged in said first conveying line portion (22).

10. The device according to claim 9, wherein said separation device (26) comprises an evacuation line (32) for evacuating conveying gas separated from said fluidised material.

11. The device according to claim 10, wherein said evacuation line (32) comprises a second control valve (54) for controlling the amount of gas evacuated from the separation device (26).

12. The device according to claim 9, wherein said separation device (26) further comprises a cyclone (28) type device arranged upstream of said pressure vessel (30).

13. The device according to any of claims 9 to 12, wherein said second junction (40) comprises a mixing device (42) for mixing said bulk material (34) into said fluidised material in said first conveying line portion (22).

## Patentansprüche

1. Verfahren zum Zuführen von Schüttgut (34) durch eine Druckluft-Transportleitung (10), wobei die Druckluft-Transportleitung (10) ein Einlass-Ende (12) und ein Auslass-Ende (14) aufweist, wobei das Verfahren Folgendes umfasst:
Fluidisieren des Schüttgutes (34) am Einlass-Ende (12) durch Zugabe von Transportgas, um einen fluidisierten Materialstrom zu bilden;
Teilen des fluidisierten Materialstroms in einen ersten Partialstrom und einen zweiten Partialstrom an einem ersten Knotenpunkt (20), der sich nahe dem Auslass-Ende (14) der Druckluft-Transportleitung (10) befindet;
Leiten des fluidisierten Materials von dem zweiten Partialstrom durch eine Trennvorrichtung (26), um das Transportgas von dem Schüttgut (34) zu trennen;
Einleiten des aus der Trennvorrichtung (26) zurückgewonnenen Schüttgutes (34) in den ersten Partialstrom an einem zweiten Knotenpunkt (40), der sich stromabwärts des ersten Knotenpunktes (20) befindet;
**dadurch gekennzeichnet, dass** die Trennvorrichtung (26) einen Druckbehälter (30) umfasst, und dadurch, dass das Verfahren das Einleiten des fluidisierten Materials aus dem zweiten Partialstrom in den Druckbehälter (30) umfasst; und
wobei die Trennvorrichtung (26) abgeschaltet wird, indem ein erstes Absperrventil (44) in dem zweiten Transportleitungsabschnitt (24) und ein zweites Absperrventil (46) in einem Auslassrohr (36), das zwischen dem Boden der Trennvorrichtung (26) und dem zweiten Knotenpunkt (40) verbunden ist, geschlossen werden,
wobei die Trennvorrichtung (26) verwendet wird, indem das zweite Absperrventil (46) geöffnet wird, während ein drittes Steuerventil (56) in dem ersten Transportleitungsabschnitt (22) mindestens teilweise geschlossen ist.

2. Verfahren nach Anspruch 1, wobei sich das Schüttgut (34) am Boden der Trennvorrichtung (26) sammelt, während das Transportgas nach oben steigt.

3. Verfahren nach Anspruch 1 oder 2, wobei das Transportgas, das von dem fluidisierten Material in der Trennvorrichtung (26) abgetrennt wurde, über eine Evakuierungsleitung (32) evakuiert wird.

4. Verfahren nach Anspruch 3, wobei das aus der Trennvorrichtung (26) zurückgewonnene Transportgas über die Evakuierungsleitung (32) zu einer Gasreinigungsvorrichtung geleitet wird.

5. Verfahren nach Anspruch 1 bis 4, wobei die Trennvorrichtung (26) eine Zyklon (28)-Vorrichtung umfasst, die stromaufwärts des Druckbehälters (30) angeordnet ist, und das Verfahren das Leiten des fluidisierten Materials aus dem zweiten Partialstrom durch die Zyklon (28)-Vorrichtung umfasst.

6. Verfahren nach einem der Ansprüche 1 bis 5, wobei das Einleiten des Schüttgutes (34) in den ersten Partialstrom am zweiten Knotenpunkt (40) das Einmischen des Schüttgutes (34) in das fluidisierten Material umfasst.

7. Verfahren nach einem der Ansprüche 1 bis 6, wobei das erste Absperrventil (44) geöffnet wird, nachdem Druckbeaufschlagungsgas in die Trennvorrichtung (26) eingeleitet wurde.

8. Verfahren nach einem der Ansprüche 1 bis 7, wobei ein Druckunterschied (52) zwischen der Druckluft-Transportleitung (10) und der Trennvorrichtung (26) gemessen wird, und wobei der gemessene Druckunterschied (52) dafür verwendet wird, den Druckbeaufschlagungsgasstrom in die Trennvorrichtung (26) zu regeln.

9. Vorrichtung zum Zuführen von Schüttgut (34) durch eine Druckluft-Transportleitung (10), wobei die Druckluft-Transportleitung (10) ein Einlass-Ende (12) und ein Auslass-Ende (14) aufweist, wobei das Schüttgut (34) am Einlass-Ende (12) fluidisiert wird, indem ein Transportgas zugegeben wird, um einen fluidisierten Materialstrom zu bilden;
wobei die Druckluft-Transportleitung (10) einen ersten Knotenpunkt (20) umfasst, der sich nahe dem Auslass-Ende (14) der Druckluft-Transportleitung (10) befindet, um die Druckluft-Transportleitung (10) in einen ersten Transportleitungsabschnitt (22) für einen ersten Partialstrom und einen zweiten Transportleitungsabschnitt (24) für einen zweiten Partialstrom zu teilen; wobei der zweite Transportleitungsabschnitt (24) eine Trennvorrichtung (26) zum Trennen des Transportgases von dem Schüttgut (34) umfasst; und
die Druckluft-Transportleitung (10) einen zweiten Knotenpunkt (40) umfasst, der sich stromabwärts des ersten Knotenpunktes (20) befindet, um aus der Trennvorrichtung (26) zurückgewonnenes Schüttgut (34) in den ersten Partialstrom des ersten Transportleitungsabschnitts (22) einzuleiten; und **dadurch gekennzeichnet, dass** die Trennvorrichtung (26) einen Druckbehälter (30) zum Auffangen des Schüttgutes (34) umfasst; und
wobei ein Auslassrohr (36) zwischen dem Boden der Trennvorrichtung (26) und dem zweiten Knotenpunkt (40) verbunden ist, um Schüttgut (34) von der Trennvorrichtung (26) zu dem ersten Transportleitungsabschnitt (22) zu leiten; und
wobei ein erstes Absperrventil (44) in dem zweiten Transportleitungsabschnitt (24) zwischen dem ersten Knotenpunkt (20) und der Trennvorrichtung (26) angeordnet ist; und
wobei ein zweites Absperrventil (46) in dem Auslassrohr (36) angeordnet ist; und
wobei ein drittes Steuerventil (56) in dem ersten Transportleitungsabschnitt (22) angeordnet ist.

10. Vorrichtung nach Anspruch 9, wobei die Trennvorrichtung (26) eine Evakuierungsleitung (32) zum Evakuieren von Transportgas umfasst, das von dem fluidisierten Material abgetrennt wurde.

11. Vorrichtung nach Anspruch 10, wobei die Evakuierungsleitung (32) ein zweites Steuerventil (54) umfasst, um die Menge des Gases zu steuern, das aus der Trennvorrichtung (26) evakuiert wurde.

12. Vorrichtung nach Anspruch 9, wobei die Trennvorrichtung (26) des Weiteren eine Zyklon (28)-Vorrichtung umfasst, die stromaufwärts des Druckbehälters (30) angeordnet ist.

13. Vorrichtung nach einem der Ansprüche 9 bis 12, wobei der zweite Knotenpunkt (40) eine Mischvorrichtung (42) zum Einmischen des Schüttgutes (34) in das fluidisierte Material in dem ersten Transportleitungsabschnitt (22) umfasst.

## Revendications

1. Procédé d'alimentation d'une matière en vrac (34) dans une ligne de transport pneumatique (10), ladite ligne de transport pneumatique (10) ayant une extrémité d'entrée (12) et une extrémité de sortie (14), ledit procédé comprenant la fluidisation de ladite matière en vrac (34) à ladite extrémité d'entrée (12) par ajout d'un gaz de transport pour former un écoulement de matière fluidisée ;
le partage dudit écoulement de matière fluidisée en un premier écoulement partiel et un deuxième écoulement partiel au niveau d'une première jonction (20) située à proximité de ladite extrémité de sortie (14) de ladite ligne de transport pneumatique (10) ;
l'alimentation de la matière fluidisée provenant dudit deuxième écoulement partiel à travers un dispositif de séparation (26) pour séparer un gaz de transport d'une matière en vrac (34) ;
l'alimentation d'une matière en vrac (34) récupérée dudit dispositif de séparation (26) dans ledit premier écoulement partiel au niveau d'une deuxième jonction (40) située en aval de ladite première jonction (20) ; **caractérisé en ce que** ledit dispositif de séparation (26) comprend une cuve sous pression (30) et **en ce que** ledit procédé comprend l'alimentation de ladite matière fluidisée provenant dudit deuxième écoulement partiel dans ladite cuve sous pression (30) ; et
dans lequel ledit dispositif de séparation (26) est fermé en fermant un premier robinet d'arrêt (44) dans ladite deuxième partie de ligne de transport (24) et un deuxième robinet d'arrêt (46) dans un tuyau de sortie (36) connecté entre le fond dudit dispositif de séparation (26) et ladite deuxième jonction (40)
dans lequel ledit dispositif de séparation (26) est utilisé en ouvrant ledit deuxième robinet d'arrêt (46) tandis qu'un troisième robinet de commande (56) dans ladite première partie de ligne de transport (22) est au moins partiellement fermé.

2. Procédé selon la revendication 1, dans lequel la matière en vrac (34) est collectée au fond du dispositif de séparation (26), tandis que le gaz de transport s'élève jusqu'au sommet.

3. Procédé selon la revendication 1 ou 2, dans lequel le gaz de transport séparé de ladite matière fluidisée dans ledit dispositif de séparation (26) est évacué par l'intermédiaire d'une ligne d'évacuation (32).

4. Procédé selon la revendication 3, dans lequel ledit gaz de transport récupéré dudit dispositif de séparation (26) est alimenté par l'intermédiaire de ladite ligne d'évacuation (32) dans un dispositif de nettoyage de gaz.

5. Procédé selon la revendication 1 à 4, dans lequel ledit dispositif de séparation (26) comprend un dispositif de type cyclone (28) agencé en amont de ladite cuve sous pression (30) et ledit procédé comprend l'alimentation de ladite matière fluidisée provenant dudit deuxième écoulement partiel dans ledit dispositif de type cyclone (28).

6. Procédé selon l'une quelconque des revendications 1 à 5, dans lequel l'alimentation de ladite matière en vrac (34) dans ledit premier écoulement partiel au niveau de ladite deuxième jonction (40) comprend le mélange de ladite matière en vrac (34) dans ladite matière fluidisée.

7. Procédé selon l'une quelconque des revendications 1 à 6, dans lequel ledit premier robinet d'arrêt (44) est ouvert après qu'un gaz de mise sous pression a été alimenté dans ledit dispositif de séparation (26).

8. Procédé selon l'une quelconque des revendications 1 à 7, dans lequel une différence de pression (52) est mesurée entre ladite ligne de transport pneumatique (10) et ledit dispositif de séparation (26) et dans lequel la différence de pression (52) mesurée est utilisée pour réguler l'écoulement de gaz de mise sous pression dans ledit dispositif de séparation (26).

9. Dispositif d'alimentation d'une matière en vrac (34) dans une ligne de transport pneumatique (10), ladite ligne de transport pneumatique (10) ayant une extrémité d'entrée (12) et une extrémité de sortie (14), dans lequel ladite matière en vrac (34) est fluidisée à ladite extrémité d'entrée (12) par ajout d'un gaz de transport pour former un écoulement de matière fluidisée ;
ladite ligne de transport pneumatique (10) comprend une première jonction (20) située à proximité de ladite extrémité de sortie (14) de ladite ligne de transport pneumatique (10) pour partager ladite ligne de transport pneumatique (10) en une première partie de ligne de transport (22) pour un premier écoulement partiel et une deuxième partie de ligne de transport (24) pour un deuxième écoulement partiel ; dans lequel ladite deuxième partie de ligne de transport (24) comprend un dispositif de séparation (26) pour séparer un gaz de transport d'une matière en vrac (34) ; et
ladite ligne de transport pneumatique (10) comprend une deuxième jonction (40) située en aval de ladite première jonction (20) pour alimenter une matière en vrac (34) récupérée dudit dispositif de séparation (26) dans ledit premier écoulement partiel de ladite première partie de ligne de transport (22) ; et
**caractérisé en ce que**
ledit dispositif de séparation (26) comprend une cuve sous pression (30) pour collecter une matière en vrac (34) ; et
dans lequel un tuyau de sortie (36) est connecté entre le fond dudit dispositif de séparation (26) et ladite deuxième jonction (40) pour alimenter une matière en vrac (34) du dispositif de séparation (26) jusqu'à ladite première partie de ligne de transport (22) ; et
dans lequel un premier robinet d'arrêt (44) est agencé dans ladite deuxième partie de ligne de transport (24) entre ladite première jonction (20) et ledit dispositif de séparation (26) ; et
dans lequel un deuxième robinet d'arrêt (46) est agencé dans ledit tuyau de sortie (36) ; et
dans lequel un troisième robinet de commande (56) est agencé dans ladite première partie de ligne de transport (22).

10. Dispositif selon la revendication 9, dans lequel ledit dispositif de séparation (26) comprend une ligne d'évacuation (32) pour évacuer un gaz de transport séparé de ladite matière fluidisée.

11. Dispositif selon la revendication 10, dans lequel ladite ligne d'évacuation (32) comprend un deuxième robinet de commande (54) pour commander la quantité de gaz évacuée du dispositif de séparation (26).

12. Dispositif selon la revendication 9, dans lequel ledit dispositif de séparation (26) comprend en outre un dispositif de type cyclone (28) agencé en amont de ladite cuve sous pression (30).

13. Dispositif selon l'une quelconque des revendications 9 à 12, dans lequel ladite deuxième jonction (40) comprend un dispositif de mélange (42) pour mélanger ladite matière en vrac (34) dans ladite matière fluidisée dans ladite première partie de ligne de transport (22).
